# EUROPEAN PATENT SPECIFICATION

(11) **EP 3 363 647 B1**
(45) Date of publication and mention of the grant of the patent: **09.03.2022**
(21) Application number: 18000021.8
(22) Date of filing: 12.01.2018
(51) Int. Cl.: B41J 11/06, B41J 13/00, B41J 13/10

(54) **INKJET PRINTING APPARATUS**
TINTENSTRAHLDRUCKVORRICHTUNG
IMPRIMANTE À JET D'ENCRE

(30) Priority: 17.02.2017 JP 2017028020
(43) Date of publication of application: 22.08.2018
(73) Proprietor: CANON KABUSHIKI KAISHA, Tokyo (JP)
(72) Inventor: Ohashi, Tetsuyo, Tokyo (JP); Takanaka, Yasuyuki, Tokyo (JP); Ishikawa, Tetsuya, Tokyo (JP); Ogasawara, Seiji, Tokyo (JP); Sato, Noriko, Tokyo (JP); Kida, Akira, Tokyo (JP); Shimoyama, Noboru, Tokyo (JP)
(74) Representative: WESER & Kollegen Patentanwälte PartmbB

(56) References cited:
- JP-A- 2014 065 293
- US-A1- 2011 001 284
- US-A1- 2014 043 394
- US-A1- 2014 241 775

## Description

### BACKGROUND OF THE INVENTION

### Field of the Invention

The present invention relates to an inkjet printing apparatus comprising a print head that ejects ink to print an image.

### Description of the Related Art

US Patent Laid-Open No. 2014/0203499 discloses an inkjet printing apparatus configured to convey a print medium placed horizontally on a feeding tray at the bottom of the apparatus to a position facing a print head, perform printing, then further convey it vertically upward, and discharge it into a discharging tray located above the feeding tray. The print medium is subjected to printing by the print head while being kept horizontal and is then conveyed vertically upward.

However, in the configuration disclosed in US Patent Laid-Open No. 2014/0203499, the print head applies ink to the print medium fed from the feeding tray while the print medium is being conveyed horizontally and then the conveying direction is changed to the vertically upward direction by roller pairs located downstream of the print head. As a result, a strong contact pressure is generated between the printed side immediately after the application of ink and the roller pairs in contact with the printed side, which may decrease the quality of an image on the printed side. Further, ink may adhere to the rollers and the ink may be transferred to a non-printed area of the same print medium or subsequent printing medium, which may also decrease the image quality.

US 2014/0241775 A1 discloses a printing apparatus wherein a stacking unit, a printing unit and a discharge section are arranged in this order in a vertically upwards direction, and wherein a printed sheet is conveyed upwards. JP-A-2014-065293 discloses an image forming apparatus with a maintenance unit which is disposed in a position below an image forming part, and a carriage loaded with a recording head is provided displaceably between an image forming position at which droplets are discharged toward a horizontal direction from the recording head and a maintenance position at which the recording head can face the maintenance unit 9.

US 2014/0043394 A1 discloses a printing apparatus wherein a nozzle array that discharges ink of the first printhead and a nozzle array that discharges ink of the second printhead are arranged to be aligned to almost the same level in a vertical direction.

### Summary of the invention

In consideration of the problem described above, an object of the present invention is to provide an inkjet printing apparatus capable of improving the quality of an image on a print medium in a configuration of feeding the print medium which is kept horizontal, performing printing by the use of a print head, and conveying the print medium vertically upward.

The present invention in its aspect provides an inkjet printing apparatus as specified in claims 1 to 6.

Further features of the present invention will become apparent from the following description of exemplary embodiments with reference to the attached drawings.

### Brief description of the drawings

Fig. 1 is a diagram showing a printing apparatus in a standby state;
Fig. 2 is a control configuration diagram of the printing apparatus;
Fig. 3 is a diagram showing the printing apparatus in a printing state;
Figs. 4A to 4C are conveying path diagrams of a print medium fed from a first cassette;
Figs. 5A to 5C are conveying path diagrams of a print medium fed from a second cassette;
Figs. 6A to 6D are conveying path diagrams in the case of performing print operation for the back side of a print medium;
Fig. 7 is a diagram showing the printing apparatus in a maintenance state; and
Figs. 8A and 8B are perspective views showing the configuration of a maintenance unit.

### DESCRIPTION OF THE EMBODIMENTS

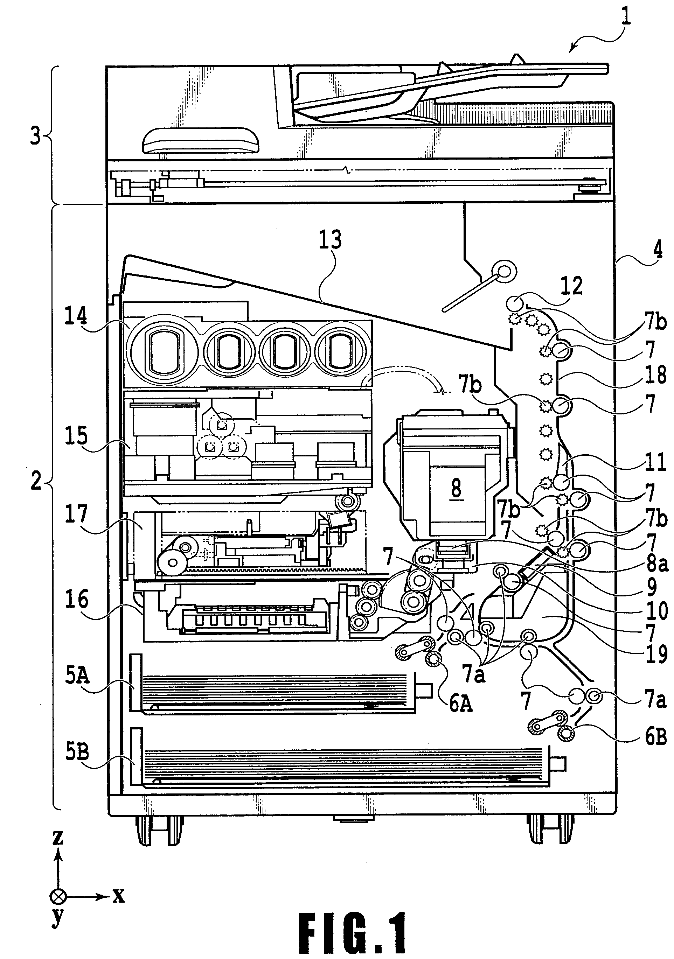

Fig. 1 is an internal configuration diagram of an inkjet printing apparatus 1 (hereinafter "printing apparatus 1") used in the present embodiment. In the drawings, an x-direction is a horizontal direction, a y-direction (a direction perpendicular to paper) is a direction in which ejection openings are arrayed in a print head 8 described later, and a z-direction is a vertical direction.

The printing apparatus 1 is a multifunction printer comprising a print unit 2 and a scanner unit 3. The printing apparatus 1 can use the print unit 2 and the scanner unit 3 separately or in synchronization to perform various processes related to print operation and scan operation. The scanner unit 3 comprises an automatic document feeder (ADF) and a flatbed scanner (FBS) and is capable of scanning a document automatically fed by the ADF as well as scanning a document placed by a user on a document plate of the FBS. The present embodiment is directed to the multifunction printer comprising both the print unit 2 and the scanner unit 3, but the scanner unit 3 may be omitted. Fig. 1 shows the printing apparatus 1 in a standby state in which neither print operation nor scan operation is performed.

In the print unit 2, a first cassette 5A and a second cassette 5B for housing printing medium (cut sheets) S are detachably provided at the bottom of a casing 4 in the vertical direction. Relatively small printing medium of up to A4 size are stacked and housed in the first cassette 5A and relatively large printing medium of up to A3 size are stacked and hosed in the second cassette 5B. A first feeding unit 6A for feeding housed printing medium one by one is provided near the first cassette 5A. Similarly, a second feeding unit 6B is provided near the second cassette 5B. In print operation, a print medium S is selectively fed from either one of the cassettes.

Conveying rollers 7, a discharging roller 12, pinch rollers 7a, spurs 7b, a guide 18, an inner guide 19, and a flapper 11 are conveying mechanisms for guiding a print medium S in a predetermined direction. The conveying rollers 7 are drive rollers located upstream and downstream of the print head 8 and driven by a conveying motor (not shown) . The pinch rollers 7a are follower rollers that are turned while nipping a print medium S together with the conveying rollers 7. The discharging roller 12 is a drive roller located downstream of the conveying rollers 7 and driven by the conveying motor (not shown). The spurs 7b nip and convey a print medium S together with the conveying rollers 7 and discharging roller 12 located downstream of the print head 8.

The guide 18 is provided in a conveying path of a print medium S to guide the print medium S in a predetermined direction. The inner guide 19 is a member extending in the y-direction. The inner guide 19 has a curved side surface and guides a print medium S along the side surface. The flapper 11 is a member for changing a direction in which a print medium S is conveyed in duplex print operation. A discharging tray 13 is a tray for stacking and housing printing medium S that were subjected to print operation and discharged by the discharging roller 12.

The print head 8 of the present embodiment is a full line type color inkjet print head. In the print head 8, a plurality of ejection openings configured to eject ink based on print data are arrayed in the y-direction in Fig. 1 so as to correspond to the width of a print medium S. When the print head 8 is in a standby position, an ejection opening surface 8a of the print head 8 is oriented vertically downward and capped with a cap unit 10 as shown in Fig. 1. In print operation, the orientation of the print head 8 is changed by a print controller 202 described later such that the ejection opening surface 8a faces a platen 9. The platen 9 includes a flat plate extending in the y-direction and supports a print medium S being subjected to print operation by the print head 8 from the back side. The movement of the print head 8 from the standby position to a printing position will be described later in detail.

An ink tank unit 14 separately stores ink of four colors to be supplied to the print head 8. An ink supply unit 15 is provided in the midstream of a flow path connecting the ink tank unit 14 to the print head 8 to adjust the pressure and flow rate of ink in the print head 8 within a suitable range. The present embodiment adopts a circulation type ink supply system, where the ink supply unit 15 adjusts the pressure of ink supplied to the print head 8 and the flow rate of ink collected from the print head 8 within a suitable range.

A maintenance unit 16 comprises the cap unit 10 and a wiping unit 17 and activates them at predetermined timings to perform maintenance operation for the print head 8. The maintenance operation will be described later in detail.

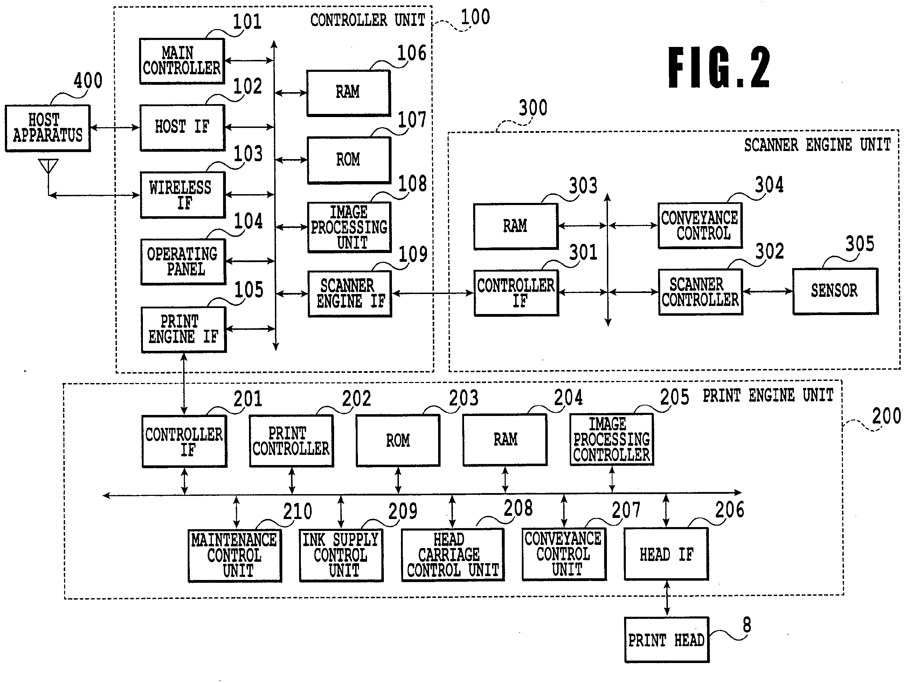

Fig. 2 is a block diagram showing a control configuration in the printing apparatus 1. The control configuration mainly includes a print engine unit 200 that exercises control over the print unit 2, a scanner engine unit 300 that exercises control over the scanner unit 3, and a controller unit 100 that exercises control over the entire printing apparatus 1. A print controller 202 controls various mechanisms of the print engine unit 200 under instructions from a main controller 101 of the controller unit 100. Various mechanisms of the scanner engine unit 300 are controlled by the main controller 101 of the controller unit 100. The control configuration will be described below in detail.

In the controller unit 100, the main controller 101 including a CPU controls the entire printing apparatus 1 using a RAM 106 as a work area in accordance with various parameters and programs stored in a ROM 107. For example, when a print job is input from a host apparatus 400 via a host I/F 102 or a wireless I/F 103, an image processing unit 108 executes predetermined image processing for received image data under instructions from the main controller 101. The main controller 101 transmits the image data subjected to the image processing to the print engine unit 200 via a print engine I/F 105.

The printing apparatus 1 may acquire image data from the host apparatus 400 via a wireless or wired communication or acquire image data from an external storage unit (such as a USB memory) connected to the printing apparatus 1. A communication system used for the wireless or wired communication is not limited. For example, as a communication system for the wireless communication, Wi-Fi (Wireless Fidelity; registered trademark) and Bluetooth (registered trademark) can be used. As a communication system for the wired communication, a USB (Universal Serial Bus) and the like can be used. For example, when a scan command is input from the host apparatus 400, the main controller 101 transmits the command to the scanner unit 3 via a scanner engine I/F 109.

An operating panel 104 is a mechanism to allow a user to do input and output for the printing apparatus 1. A user can give an instruction to perform operation such as copying and scanning, set a print mode, and recognize information about the printing apparatus 1 via the operating panel 104.

In the print engine unit 200, the print controller 202 including a CPU controls various mechanisms of the print unit 2 using a RAM 204 as a work area in accordance with various parameters and programs stored in a ROM 203. When various commands and image data are received via a controller I/F 201, the print controller 202 temporarily stores them in the RAM 204. The print controller 202 allows an image processing controller 205 to convert the stored image data into print data such that the print head 8 can use it for print operation. After the generation of the print data, the print controller 202 allows the print head 8 to perform print operation based on the print data via a head I/F 206. At this time, the print controller 202 conveys a print medium S by driving the feeding units 6A and 6B, conveying rollers 7, discharging roller 12, and flapper 11 shown in Fig. 1 via a conveyance control unit 207. The print head 8 performs print operation in synchronization with the conveyance operation of the print medium S under instructions from the print controller 202, thereby performing printing.

A head carriage control unit 208 changes the orientation and position of the print head 8 in accordance with an operating state of the printing apparatus 1 such as a maintenance state or a printing state. An ink supply control unit 209 controls the ink supply unit 15 such that the pressure of ink supplied to the print head 8 is within a suitable range. A maintenance control unit 210 controls the operation of the cap unit 10 and wiping unit 17 in the maintenance unit 16 when performing maintenance operation for the print head 8.

In the scanner engine unit 300, the main controller 101 controls hardware resources of the scanner controller 302 using the RAM 106 as a work area in accordance with various parameters and programs stored in the ROM 107, thereby controlling various mechanisms of the scanner unit 3. For example, the main controller 101 controls hardware resources in the scanner controller 302 via a controller I/F 301 to cause a conveyance control unit 304 to convey a document placed by a user on the ADF and cause a sensor 305 to scan the document. The scanner controller 302 stores scanned image data in a RAM 303. The print controller 202 can convert the image data acquired as described above into print data to enable the print head 8 to perform print operation based on the image data scanned by the scanner controller 302.

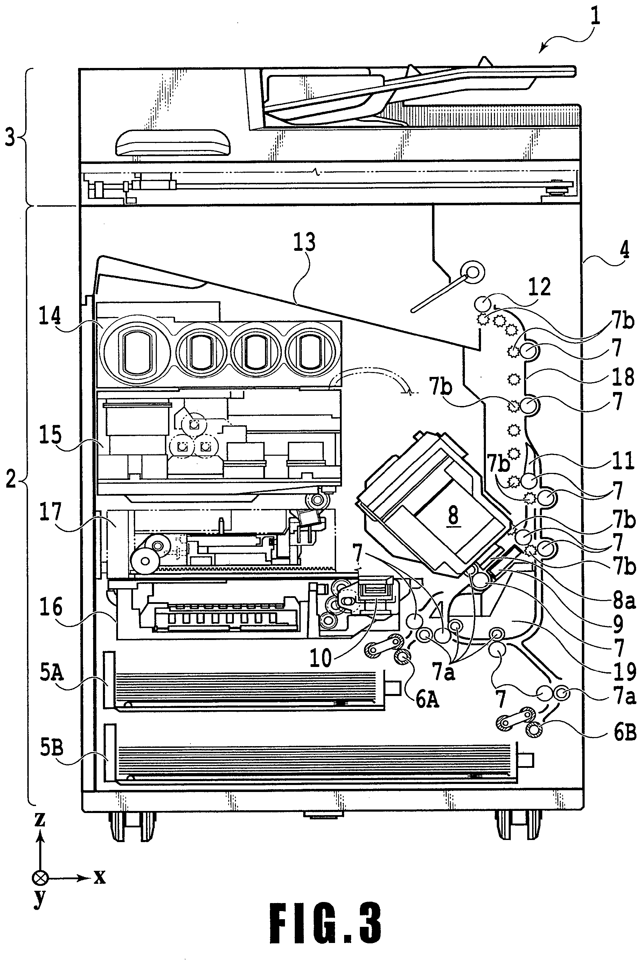

Fig. 3 shows the printing apparatus 1 in a printing state. As compared with the standby state shown in Fig. 1, the cap unit 10 is separated from the ejection opening surface 8a of the print head 8 and the ejection opening surface 8a faces the platen 9. In the present embodiment, the plane of the platen 9 is inclined about 45° with respect to the horizontal plane. The ejection opening surface 8a of the print head 8 in a printing position is also inclined about 45° with respect to the horizontal plane so as to keep a constant distance from the platen 9.

In the case of moving the print head 8 from the standby position shown in Fig. 1 to the printing position shown in Fig. 3, the print controller 202 uses the maintenance control unit 210 to move the cap unit 10 down to an evacuation position shown in Fig. 3, thereby separating the cap member 10a from the ejection opening surface 8a of the print head 8. The print controller 202 then uses the head carriage control unit 208 to turn the print head 8 45° while adjusting the vertical height of the print head 8 such that the ejection opening surface 8a faces the platen 9. After the completion of print operation, the print controller 202 reverses the above procedure to move the print head 8 from the printing position to the standby position.

Next, a conveying path of a print medium S in the print unit 2 will be described. When a print command is input, the print controller 202 first uses the maintenance control unit 210 and the head carriage control unit 208 to move the print head 8 to the printing position shown in Fig. 3. The print controller 202 then uses the conveyance control unit 207 to drive either the first feeding unit 6A or the second feeding unit 6B in accordance with the print command and feed a print medium S.

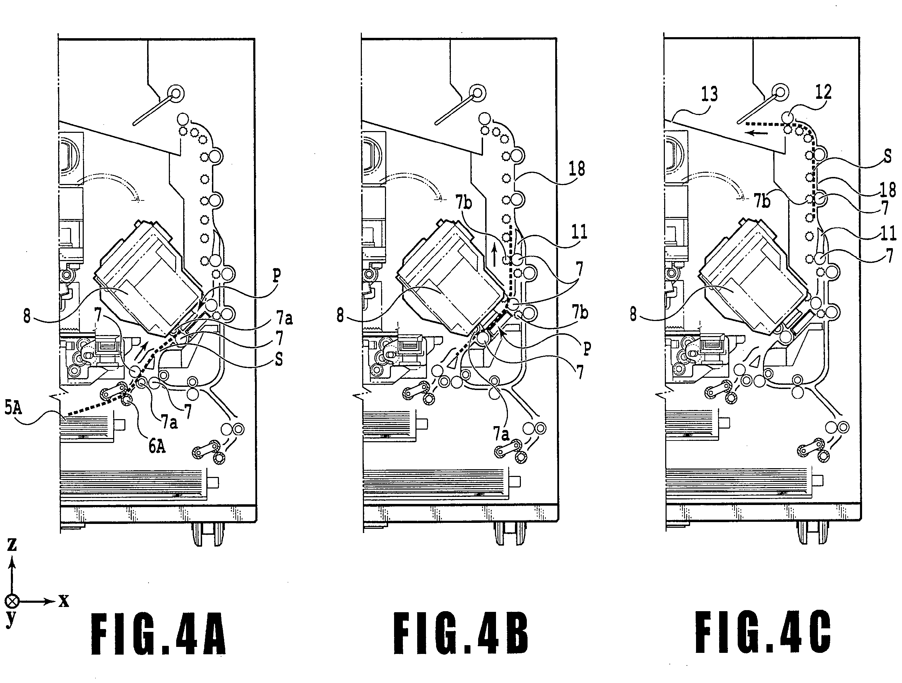

Figs. 4A to 4C are diagrams showing a conveying path in the case of feeding an A4 size print medium S from the first cassette 5A. A print medium S at the top of a stack of printing medium in the first cassette 5A is separated from the rest of the stack by the first feeding unit 6A and conveyed toward a print area P between the platen 9 and the print head 8 while being nipped between the conveying rollers 7 and the pinch rollers 7a. Fig. 4A shows a conveying state where the front end of the print medium S is about to reach the print area P. The direction of movement of the print medium S is changed from the horizontal direction (x-direction) to a direction inclined about 45° with respect to the horizontal direction while being fed by the first feeding unit 6A to reach the print area P.

In the print area P, a plurality of ejection openings provided in the print head 8 eject ink toward the print medium S. In an area where ink is applied to the print medium S, the back side of the print medium S is supported by the platen 9 so as to keep a constant distance between the ejection opening surface 8a and the print medium S. After ink is applied to the print medium S, the conveying rollers 7 and the spurs 7b guide the print medium S such that the print medium S passes on the left of the flapper 11 with its tip inclined to the right and is conveyed along the guide 18 in the vertically upward direction of the printing apparatus 1. Fig. 4B shows a state where the front end of the print medium S has passed through the print area P and the print medium S is being conveyed vertically upward. The conveying rollers 7 and the spurs 7b change the direction of movement of the print medium S from the direction inclined about 45° with respect to the horizontal direction in the print area P to the vertically upward direction.

After being conveyed vertically upward, the print medium S is discharged into the discharging tray 13 by the discharging roller 12 and the spurs 7b. Fig. 4C shows a state where the front end of the print medium S has passed through the discharging roller 12 and the print medium S is being discharged into the discharging tray 13. The discharged print medium S is held in the discharging tray 13 with the side on which an image was printed by the print head 8 down.

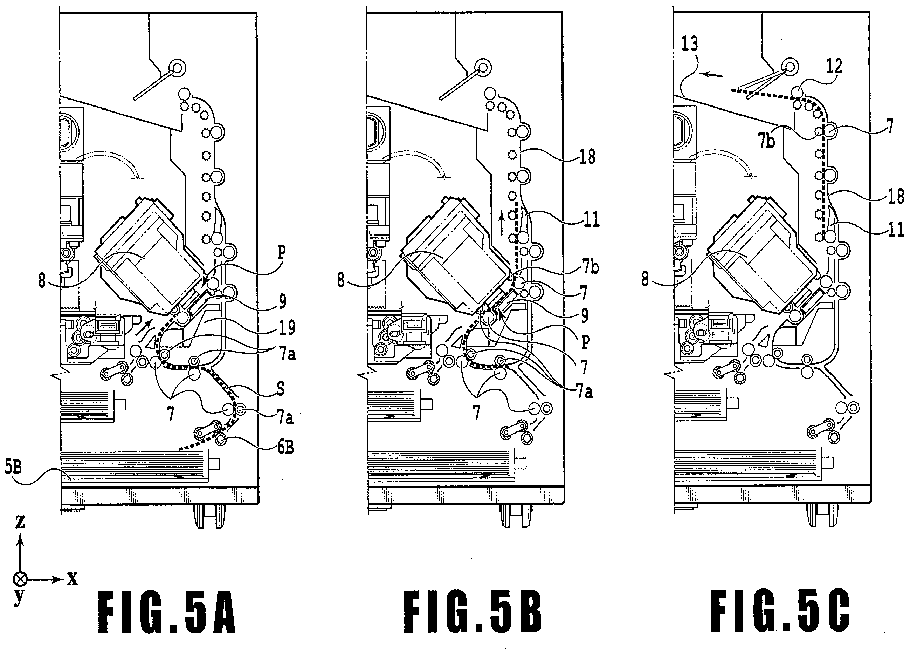

Figs. 5A to 5C are diagrams showing a conveying path in the case of feeding an A3 size print medium S from the second cassette 5B. A print medium S at the top of a stack of printing medium in the second cassette 5B is separated from the rest of the stack by the second feeding unit 6B and conveyed toward the print area P between the platen 9 and the print head 8 while being nipped between the conveying rollers 7 and the pinch rollers 7a.

Fig. 5A shows a conveying state where the front end of the print medium S is about to reach the print area P. In a part of the conveying path, through which the print medium S is fed by the second feeding unit 6B toward the print area P, the plurality of conveying rollers 7, the plurality of pinch rollers 7a, and the inner guide 19 are provided such that the print medium S is conveyed to the platen 9 while being bent into an S-shape.

The rest of the conveying path is the same as that in the case of the A4 size print medium S shown in Figs. 4B and 4C. Fig. 5B shows a state where the front end of the print medium S has passed through the print area P and the print medium S is being conveyed vertically upward. Fig. 5C shows a state where the front end of the print medium S has passed through the discharging roller 12 and the print medium S is being discharged into the discharging tray 13.

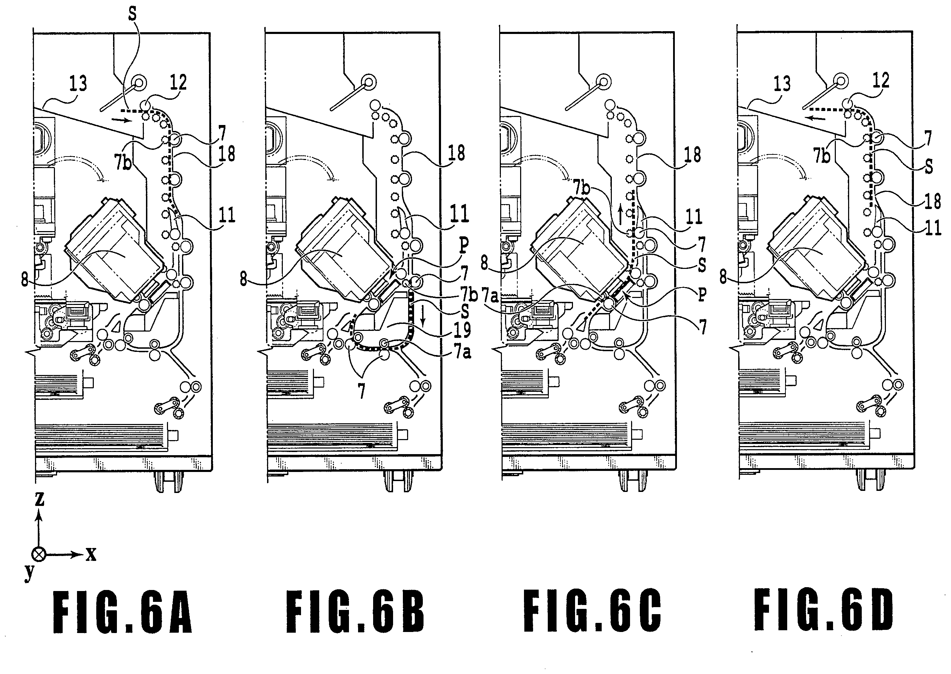

Figs. 6A to 6D show a conveying path in the case of performing print operation (duplex printing) for the back side (second side) of an A4 size print medium S. In the case of duplex printing, print operation is first performed for the first side (front side) and then performed for the second side (back side). A conveying procedure during print operation for the first side is the same as that shown in Figs. 4A to 4C and therefore description will be omitted. A conveying procedure subsequent to Fig. 4C will be described below.

After the print head 8 finishes print operation for the first side and the back end of the print medium S passes by the flapper 11, the print controller 202 turns the conveying rollers 7 backward to convey the print medium S into the printing apparatus 1. At this time, since the flapper 11 is controlled by an actuator (not shown) such that the tip of the flapper 11 is inclined to the left, the front end of the print medium S (corresponding to the back end during the print operation for the first side) passes on the right of the flapper 11 and is conveyed vertically downward. Fig. 6A shows a state where the front end of the print medium S (corresponding to the back end during the print operation for the first side) is passing on the right of the flapper 11.

Then, the print medium S is conveyed along the curved outer surface of the inner guide 19 and then conveyed again to the print area P between the print head 8 and the platen 9. At this time, the second side of the print medium S faces the ejection opening surface 8a of the print head 8. Fig. 6B shows a conveying state where the front end of the print medium S is about to reach the print area P for print operation for the second side.

The rest of the conveying path is the same as that in the case of the print operation for the first side shown in Figs. 4B and 4C. Fig. 6C shows a state where the front end of the print medium S has passed through the print area P and the print medium S is being conveyed vertically upward. At this time, the flapper 11 is controlled by the actuator (not shown) such that the tip of the flapper 11 is inclined to the right. Fig. 6D shows a state where the front end of the print medium S has passed through the discharging roller 12 and the print medium S is being discharged into the discharging tray 13.

Next, maintenance operation for the print head 8 will be described. As described with reference to Fig. 1, the maintenance unit 16 of the present embodiment comprises the cap unit 10 and the wiping unit 17 and activates them at predetermined timings to perform maintenance operation.

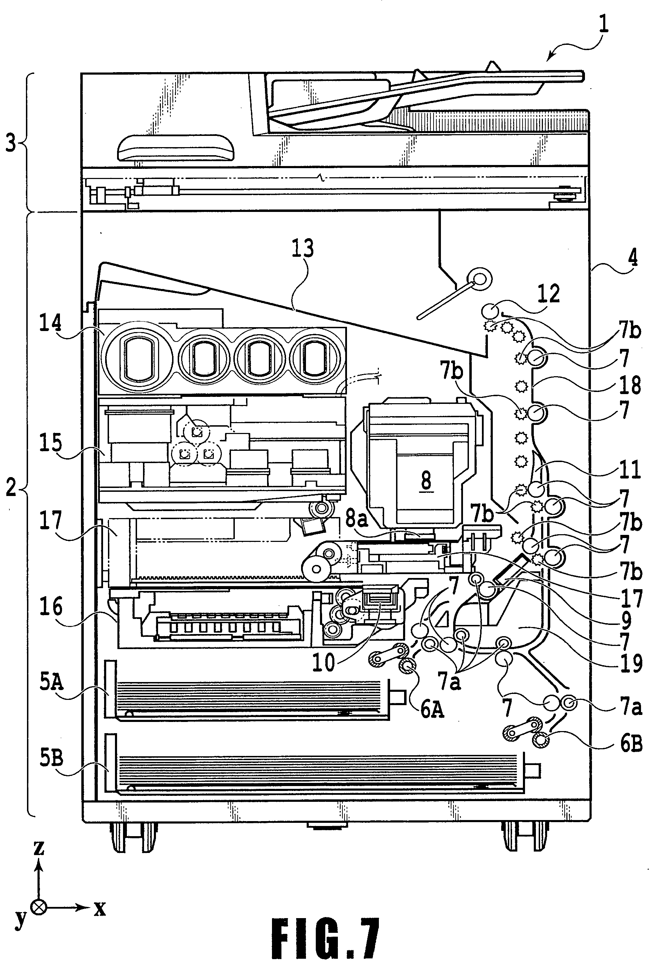

Fig. 7 is a diagram showing the printing apparatus 1 in a maintenance state. In the case of moving the print head 8 from the standby position shown in Fig. 1 to a maintenance position shown in Fig. 7, the print controller 202 moves the print head 8 vertically upward and moves the cap unit 10 vertically downward. The print controller 202 then moves the wiping unit 17 from the evacuation position to the right in Fig. 7. After that, the print controller 202 moves the print head 8 vertically downward to the maintenance position where maintenance operation can be performed.

On the other hand, in the case of moving the print head 8 from the printing position shown in Fig. 3 to the maintenance position shown in Fig. 7, the print controller 202 moves the print head 8 vertically upward while turning it 45°. The print controller 202 then moves the wiping unit 17 from the evacuation position to the right. Following that, the print controller 202 moves the print head 8 vertically downward to the maintenance position where maintenance operation can be performed.

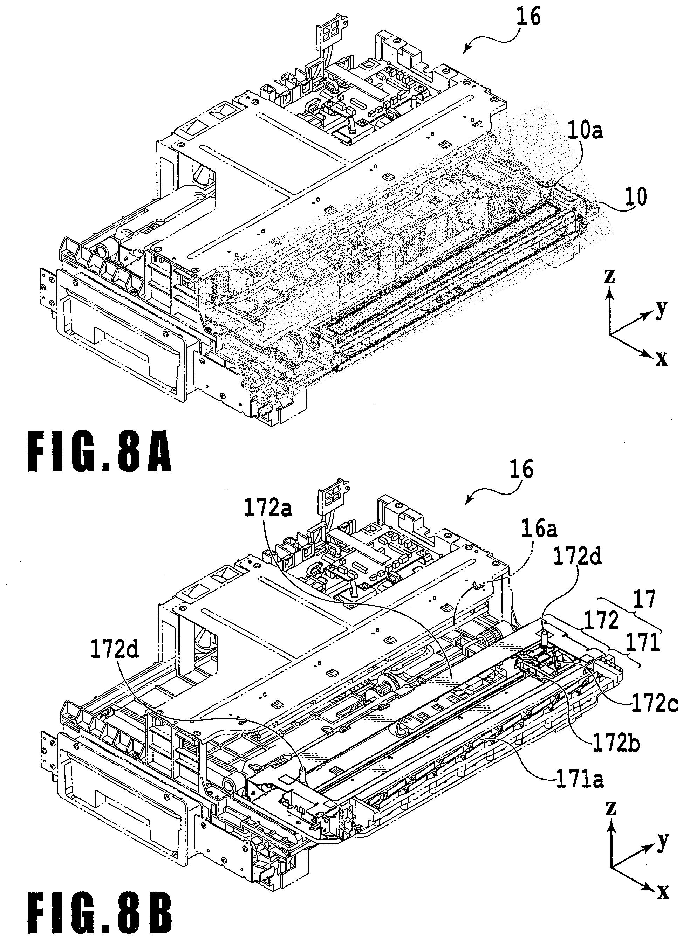

Fig. 8A is a perspective view showing the maintenance unit 16 in a standby position. Fig. 8B is a perspective view showing the maintenance unit 16 in a maintenance position. Fig. 8A corresponds to Fig. 1 and Fig. 8B corresponds to Fig. 7. When the print head 8 is in the standby position, the maintenance unit 16 is in the standby position shown in Fig. 8A, the cap unit 10 has been moved vertically upward, and the wiping unit 17 is housed in the maintenance unit 16. The cap unit 10 comprises a box-shaped cap member 10a extending in the y-direction. The cap member 10a can be brought into intimate contact with the ejection opening surface 8a of the print head 8 to prevent ink from evaporating from the ejection openings. The cap unit 10 also has the function of collecting ink ejected to the cap member 10a for preliminary ejection or the like and allowing a suction pump (not shown) to suck the collected ink.

On the other hand, in the maintenance position shown in Fig. 8B, the cap unit 10 has been moved vertically downward and the wiping unit 17 has been drawn from the maintenance unit 16. The wiping unit 17 comprises two wiper units: a blade wiper unit 171 and a vacuum wiper unit 172.

In the blade wiper unit 171, blade wipers 171a for wiping the ejection opening surface 8a in the x-direction are provided in the y-direction along the length of an area where the ejection openings are arrayed. In the case of performing wiping operation by the use of the blade wiper unit 171, the wiping unit 17 moves the blade wiper unit 171 in the x-direction while the print head 8 is positioned at a height at which the print head 8 can be in contact with the blade wipers 171a. This movement enables the blade wipers 171a to wipe ink and the like adhering to the ejection opening surface 8a.

The entrance of the maintenance unit 16 through which the blade wipers 171a are housed is equipped with a wet wiper cleaner 16a for removing ink adhering to the blade wipers 171a and applying a wetting liquid to the blade wipers 171a. The wet wiper cleaner 16a removes substances adhering to the blade wipers 171a and applies the wetting liquid to the blade wipers 171a each time the blade wipers 171a are inserted into the maintenance unit 16. The wetting liquid is transferred to the ejection opening surface 8a in the next wiping operation for the ejection opening surface 8a, thereby facilitating sliding between the ejection opening surface 8a and the blade wipers 171a.

The vacuum wiper unit 172 comprises a flat plate 172a having an opening extending in the y-direction, a carriage 172b movable in the y-direction within the opening, and a vacuum wiper 172c mounted on the carriage 172b. The vacuum wiper 172c is provided to wipe the ejection opening surface 8a in the y-direction along with the movement of the carriage 172b. The tip of the vacuum wiper 172c has a suction opening connected to the suction pump (not shown). Accordingly, if the carriage 172b is moved in the y-direction while operating the suction pump, ink and the like adhering to the ejection opening surface 8a of the print head 8 are wiped and gathered by the vacuum wiper 172c and sucked into the suction opening. At this time, the flat plate 172a and a dowel pin 172d provided at both ends of the opening are used to align the ejection opening surface 8a with the vacuum wiper 172c.

In the present embodiment, it is possible to carry out a first wiping process in which the blade wiper unit 171 performs wiping operation and the vacuum wiper unit 172 does not perform wiping operation and a second wiping process in which both the wiper units sequentially perform wiping operation. In the case of the first wiping process, the print controller 202 first draws the wiping unit 17 from the maintenance unit 16 while the print head 8 is evacuated vertically above the maintenance position shown in Fig. 7. The print controller 202 moves the print head 8 vertically downward to a position where the print head 8 can be in contact with the blade wipers 171a and then moves the wiping unit 17 into the maintenance unit 16. This movement enables the blade wipers 171a to wipe ink and the like adhering to the ejection opening surface 8a. That is, the blade wipers 171a wipe the ejection opening surface 8a when moving from a position drawn from the maintenance unit 16 into the maintenance unit 16.

After the blade wiper unit 171 is housed, the print controller 202 moves the cap unit 10 vertically upward and brings the cap member 10a into intimate contact with the ejection opening surface 8a of the print head 8. In this state, the print controller 202 drives the print head 8 to perform preliminary ejection and allows the suction pump to suck ink collected in the cap member 10a.

In the case of the second wiping process, the print controller 202 first slides the wiping unit 17 to draw it from the maintenance unit 16 while the print head 8 is evacuated vertically above the maintenance position shown in Fig. 7. The print controller 202 moves the print head 8 vertically downward to the position where the print head 8 can be in contact with the blade wipers 171a and then moves the wiping unit 17 into the maintenance unit 16. This movement enables the blade wipers 171a to perform wiping operation for the ejection opening surface 8a. Next, the print controller 202 slides the wiping unit 17 to draw it from the maintenance unit 16 to a predetermined position while the print head 8 is evacuated again vertically above the maintenance position shown in Fig. 7. Then, the print controller 202 uses the flat plate 172a and the dowel pins 172d to align the ejection opening surface 8a with the vacuum wiper unit 172 while moving the print head 8 down to a wiping position shown in Fig. 7. After that, the print controller 202 allows the vacuum wiper unit 172 to perform the wiping operation described above. After evacuating the print head 8 vertically upward and housing the wiping unit 17, the print controller 202 allows the cap unit 10 to perform preliminary ejection into the cap member 10a and suction operation of collected ink in the same manner as the first wiping process.

According to the present invention described above, a printing part (ejection opening surface 8a) of the print head 8 is in a position within an area occupied by the second cassette 5B in the x-direction in both the standby state shown in Fig. 1 and the printing state shown in Fig. 3. The ejection opening surface 8a and the second cassette 5B have a positional relationship where they are overlapped in the x-direction. That is, when viewed from above the apparatus the ejection opening surface 8a and the second cassette 5B seem to be overlapped each other. Further, the first cassette 5A and the second cassette 5B are aligned on one side in the x-direction and the print head 8 is moved within a differential area between the first cassette 5A and the second cassette 5B in the x-direction, thereby making effective use of space. As a result, the footprint of the printing apparatus 1 can be reduced to an area substantially equivalent to a stacking unit (the second cassette 5B) for housing unprinted printing medium. It should be noted that all mechanisms including not only the print head but also the platen, conveying unit, conveying path, discharging unit, ink tank unit, and maintenance unit may be located within the area of the stacking unit (the second cassette 5B) in the x-direction.

In view of the above, according to the present embodiment, in a configuration of feeding a print medium S that is placed horizontally to the print area P, performing printing, and then conveying the print medium S vertically upward, the conveying direction of the print medium S is changed from the horizontal direction to a direction close to the vertical direction before applying ink to the print medium S. That is, although roller pairs including the conveying rollers 7 and spurs 7b located downstream of the print head 8 are in contact with the printed side immediately after the application of ink, the print medium S that has already become close to a vertical posture than a horizontal posture is further directed vertically. Accordingly, a contact pressure generated between the printed side and the roller pairs can be reduced compared with a configuration of changing the conveying direction of a print medium immediately after printing from the horizontal direction to the vertical direction as disclosed in US Patent Laid-Open No. 2014/0203499. As a result, it is possible to prevent a decrease in quality of an image on the printed side and a transfer of ink adhering to the roller pairs to subsequent printing medium while reducing the footprint of the printing apparatus, thereby improving the quality of images on printing medium.

In the embodiment described above, the conveying angle of a print medium S is 45° during printing, but the conveying angle is not limited to 45°. A contact pressure generated between the printed side and the roller pairs immediately after printing can be smaller than a conventional one and the advantageous result of the present invention can be produced as long as the print medium is inclined to be closer to the vertical upward plane (90°) than the horizontal plane (0°) of a stacking state.

However, if the conveying angle during printing is too close to the right angle, a reaction force exerted on a print medium by a platen against the weight of the print medium becomes small and the flatness of the printed side and a distance between sheets become unstable, which may decrease image quality. It is therefore preferable that the conveying angle of a print medium in a printing unit, that is, the installation angle of a platen is adjusted such that a problem caused by the contact force of the roller pairs acting on the printed side and a problem caused by flatness are both inconspicuous. Studies conducted by inventors of the present invention have shown that the problems can be inconspicuous and suitable images can be printed on printing medium in a case where the platen is inclined at an angle from 30° to 60° with respect to the horizontal plane, preferably from 40° to 50° with respect to the horizontal plane.

In addition, the full line type printing apparatus has been described as an example, but the present invention can also be applied to a serial type printing apparatus. In the case of a serial type printing apparatus, a print head has a length shorter in the y-direction than the print head 8 used in the embodiment described above and is movable in the y-direction. On an ejection opening surface, a plurality of ejection openings configured to eject ink of the same color are arrayed in the conveying direction. An image is gradually formed on a print medium S by alternately repeating a printing scan in which the print head is moved in the y-direction while each ejection opening ejects ink based on print data and conveying operation in which the print medium S is conveyed over a distance corresponding to the print width of the print head. In the case of such a serial type printing apparatus too, the advantageous result of the present invention can be sufficiently produced, that is, the quality of images on printing medium can be improved while reducing the footprint.

## Claims

1. An inkjet printing apparatus (1) comprising:
a stacking unit (5A) configured to stack printing medium (S) substantially horizontally;
a print head (8) having an ejection opening surface (8a) located vertically above the stacking unit (5A), on which a plurality of ejection openings for ejecting ink are provided, the print head (8) being configured to perform printing by ejecting ink to a print medium (S) fed from the stacking unit (5A);
a platen (9) configured to support the back side of a print medium (S) in a position facing the ejection opening surface (8a) of the print head (8);
a discharging unit (13) located vertically above the print head (8), on which a print medium (S) subjected to printing by the print head (8) is discharged; and
a conveying unit (7,7a,7b) configured to convey a print medium subjected to printing by the print head vertically upwards toward the discharging unit,
wherein the ejection opening surface faces the platen in a case where the inkjet printing apparatus is in a printing state and faces vertically downward in a case where the inkjet printing apparatus is in a maintenance state; and
the platen (9) supports the back side of a print medium (S) at an angle from 30° to 60° with respect to a horizontal direction;
**characterized in that**
the stacking unit includes a first stacking unit configured to stack first printing medium and a second stacking unit located vertically below the first stacking unit and configured to stack second printing medium that are larger in size than the first printing medium,
the ejection opening surface is located in a position included in an area vertically above an area occupied by the second stacking unit and not included in an area vertically above an area occupied by the first stacking unit in a case where the inkjet printing apparatus is in the printing state, a case where the inkjet printing apparatus is in a standby state, and a case where the inkjet printing apparatus is in the maintenance state, wherein
the standby state is a state in which the ejection opening surface faces vertically downward and is capped with a cap unit (10).

2. The inkjet printing apparatus according to claim 1, wherein the print head, the platen, the discharging unit, and the conveying unit are located vertically above an area occupied by the stacking unit.

3. The inkjet printing apparatus according to claim 1 or 2, wherein the angle is an angle from 40° to 50° with respect to the horizontal direction.

4. The inkjet printing apparatus according to claim 3, wherein the angle is an angle of 45° with respect to the horizontal direction.

5. The inkjet printing apparatus according to any one of claims 1 to 4, further comprising:
an ink tank unit configured to supply ink to the print head; and
a maintenance unit configured to perform maintenance for the print head,
wherein the print head, the platen, the discharging unit, the conveying unit, the ink tank unit, and the maintenance unit are located vertically above an area occupied by the stacking unit.

6. The inkjet printing apparatus according to any one of claims 1 to 5, wherein in the print head, ejection openings configured to eject ink are arrayed in a width direction of a print medium conveyed by the conveying unit.

## Patentansprüche

1. Tintenstrahldruckvorrichtung (1), umfassend:
eine Stapeleinheit (5A), die konfiguriert ist, ein Druckmedium (S) im Wesentlichen horizontal zu stapeln;
einen Druckkopf (8) mit einer Ausstoßöffnungsfläche (8a), die vertikal über der Stapeleinheit (5A) angeordnet ist und auf der mehrere Ausstoßöffnungen zum Ausstoßen von Tinte vorgesehen sind, wobei der Druckkopf (8) konfiguriert ist, ein Drucken durch Ausstoßen von Tinte auf ein von der Stapeleinheit (5A) zugeführtes Druckmedium (S) durchzuführen;
eine Platte (9), die konfiguriert ist, die Rückseite eines Druckmediums (S) in einer der Ausstoßöffnungsfläche (8a) des Druckkopfs (8) zugewandten Position zu stützen;
eine Ausgabeeinheit (13), die vertikal über dem Druckkopf (8) angeordnet ist und auf der ein Druckmedium (S), das durch den Druckkopf (8) einem Drucken unterzogen wird, ausgegeben wird; und
eine Beförderungseinheit (7, 7a, 7b), die konfiguriert ist, ein Druckmedium, das durch den Druckkopf einem Drucken unterzogen wird, vertikal nach oben zur Ausgabeeinheit zu befördern,
wobei die Ausstoßöffnungsfläche der Platte in einem Fall zugewandt ist, in dem sich die Tintenstrahldruckvorrichtung in einem Druckzustand befindet, und in einem Fall vertikal nach unten gewandt ist, in dem sich die Tintenstrahldruckvorrichtung in einem Wartungszustand befindet; und
die Platte (9) die Rückseite eines Druckmediums (S) in einem Winkel von 30° bis 60° in Bezug auf eine horizontale Richtung stützt;
**dadurch gekennzeichnet, dass**
die Stapeleinheit eine zum Stapeln eines ersten Druckmediums konfigurierte erste Stapeleinheit und eine vertikal unter der ersten Stapeleinheit angeordnete zweite Stapeleinheit enthält, die konfiguriert ist, ein zweites Druckmedium zu stapeln, das größer als das erste Druckmedium ist,
die Ausstoßöffnungsfläche in einer Position angeordnet ist, die in einem Gebiet vertikal über einem durch die zweite Stapeleinheit belegten Gebiet enthalten ist, und nicht in einem Gebiet vertikal über einem durch die erste Stapeleinheit belegten Gebiet enthalten ist, in einem Fall, in dem sich die Tintenstrahldruckvorrichtung im Druckzustand befindet, in einem Fall, in dem sich die Tintenstrahldruckvorrichtung in einem Standby-Zustand befindet und in einem Fall, in dem sich die Tintenstrahldruckvorrichtung im Wartungszustand befindet, wobei
der Standby-Zustand ein Zustand ist, in dem die Ausstoßöffnungsfläche vertikal nach unten gewandt ist, und mit einer Abdeckeinheit (10) abgedeckt ist.

2. Tintenstrahldruckvorrichtung nach Anspruch 1, wobei der Druckkopf, die Platte, die Ausgabeeinheit und die Beförderungseinheit vertikal über einem durch die Stapeleinheit belegten Gebiet angeordnet sind.

3. Tintenstrahldruckvorrichtung nach Anspruch 1 oder 2, wobei der Winkel ein Winkel von 40° bis 50° in Bezug auf die horizontale Richtung ist.

4. Tintenstrahldruckvorrichtung nach Anspruch 3, wobei der Winkel ein Winkel von 45° in Bezug auf die horizontale Richtung ist.

5. Tintenstrahldruckvorrichtung nach einem der Ansprüche 1 bis 4, ferner umfassend:
eine Tintentankeinheit, die konfiguriert ist, dem Druckkopf Tinte zuzuführen; und
eine Wartungseinheit, die konfiguriert ist, eine Wartung für den Druckkopf durchzuführen,
wobei der Druckkopf, die Platte, die Ausgabeeinheit, die Beförderungseinheit, die Tintentankeinheit und die Wartungseinheit vertikal über einem durch die Stapeleinheit belegten Gebiet angeordnet sind.

6. Tintenstrahldruckvorrichtung nach einem der Ansprüche 1 bis 5, wobei im Druckkopf für den Tintenausstoß konfigurierte Ausstoßöffnungen in einer Breitenrichtung eines durch die Beförderungseinheit beförderten Druckmediums angeordnet sind.

## Revendications

1. Appareil d'impression à jet d'encre (1) comprenant :
une unité d'empilage (5A) configurée pour empiler un support d'impression (S) sensiblement horizontalement ;
une tête d'impression (8) ayant une surface d'ouverture d'éjection (8a) située verticalement au-dessus de l'unité d'empilage (5A), sur laquelle sont prévues une pluralité d'ouvertures d'éjection destinées à éjecter de l'encre, la tête d'impression (8) étant configurée pour effectuer une impression en éjectant de l'encre vers un support d'impression (S) introduit depuis l'unité d'empilage (5A) ;
une platine (9) configurée pour supporter la face arrière d'un support d'impression (S) à une position située en face de la surface d'ouverture d'éjection (8a) de la tête d'impression (8) ;
une unité de déchargement (13) située verticalement au-dessus de la tête d'impression (8), sur laquelle est déchargé un support d'impression (S) soumis à l'impression par la tête d'impression (8) ; et
une unité de transport (7, 7a, 7b) configurée pour transporter un support d'impression soumis à l'impression par la tête d'impression verticalement vers le haut en direction de l'unité de déchargement,
dans lequel la surface d'ouverture d'éjection fait face à la platine dans un cas où l'appareil d'impression à jet d'encre est dans un état d'impression et fait face verticalement vers le bas dans un cas où l'appareil d'impression à jet d'encre est dans un état de maintenance ; et
la platine (9) supporte la face arrière d'un support d'impression (S) selon un angle de 30° à 60° par rapport à une direction horizontale ;
**caractérisé en ce que**
l'unité d'empilage comprend une première unité d'empilage configurée pour empiler un premier support d'impression et une seconde unité d'empilage située verticalement en-dessous de la première unité d'empilage et configurée pour empiler un second support d'impression dont la taille est supérieure à celle du premier support d'impression,
la surface d'ouverture d'éjection est située à une position comprise dans une zone située verticalement au-dessus d'une zone occupée par la seconde unité d'empilage et non comprise dans une zone située verticalement au-dessus d'une zone occupée par la première unité d'empilage dans un cas où l'appareil d'impression à jet d'encre est dans l'état d'impression, un cas où l'appareil d'impression à jet d'encre est dans un état d'attente, et un cas où l'appareil d'impression à jet d'encre est dans l'état de maintenance, où
l'état d'attente est un état dans lequel la surface d'ouverture d'éjection fait face verticalement vers le bas et est capuchonnée par une unité formant capuchon (10).

2. Appareil d'impression à jet d'encre selon la revendication 1, dans lequel la tête d'impression, la platine, l'unité de déchargement et l'unité de transport sont situées verticalement au-dessus d'une zone occupée par l'unité d'empilage.

3. Appareil d'impression à jet d'encre selon la revendication 1 ou 2, dans lequel l'angle est un angle de 40° à 50° par rapport à la direction horizontale.

4. Appareil d'impression à jet d'encre selon la revendication 3, dans lequel l'angle est un angle de 45° par rapport à la direction horizontale.

5. Appareil d'impression à jet d'encre selon l'une quelconque des revendications 1 à 4, comprenant en outre :
une unité à réservoir d'encre configurée pour fournir de l'encre à la tête d'impression ; et
une unité de maintenance configurée pour effectuer la maintenance de la tête d'impression,
dans lequel la tête d'impression, la platine, l'unité de déchargement, l'unité de transport, l'unité à réservoir d'encre et l'unité de maintenance sont situées verticalement au-dessus d'une zone occupée par l'unité d'empilage.

6. Appareil d'impression à jet d'encre selon l'une quelconque des revendications 1 à 5, dans lequel, dans la tête d'impression, des ouvertures d'éjection configurées pour éjecter de l'encre sont disposées en réseau dans le sens de la largeur d'un support d'impression transporté par l'unité de transport.
